# EUROPEAN PATENT APPLICATION

(11) **EP 3 168 177 A1**
(43) Date of publication of application: **17.05.2017**
(21) Application number: 15194558.1
(22) Date of filing: 13.11.2015
(51) Int. Cl.: B65G 47/71

(54) **DIVERTER ARM FOR A CHECKOUT DEVICE**

(71) Applicant: ROL Aktiebolag, 555 93 Jönköping (SE)
(72) Inventor: Walker, Rodney, 555 93 Jönköping (SE)
(74) Representative: Awapatent AB

(57) **Abstract**

The present invention relates to a diverter arm (1) for a checkout, the checkout having two outlet conveyors on which the inlet stream of articles is to be spread. The diverter arm (1) comprises an elongated member (2) having a first side portion (3), a second side portion (4), a top portion (5) and a bottom portion (6) . The bottom portion (6) comprises a first leg portion (7) and a second leg portion (8) providing a first bottom surface (6a) and a second bottom surface (6b) respectively, wherein the first and second leg portions (7, 8) in a direction transverse to the longitudinal direction are separated by a distance (D).

## Description

### Technical Field

The present disclosure relates to a diverter arm for use in relation to a checkout device, and especially to the structural design related to a diverter arm.

### Background

In retail environments such as supermarkets, it is common that customers are required to process the items they intend to purchase at a manned or automated point of sale device. The process, commonly known as the checkout process, typically involves presenting the items for identification, whereupon a summary of the items is made, and the customer is required to complete a transaction in order to receive title to the items presented. Manned or automated point of sale devices can take the form of a piece of furniture, and in this regard are commonly referred to as checkouts or checkout devices in many countries.

Checkout devices are typically designed to allow the customer to place the items chosen from the store on a surface that leads to an identification system. A manned checkout device typically involves a store attendant using an identification system such as an item scanning device to process the items, whereas an automated device will typically feed the items into an identification system. In the case of both manned and automated devices, once the items have been identified they will be moved into an area where the customer can collect the items. This area is typically referred to as a packing area.

Checkout device packing areas are in some cases divided into more than one section, thereby allowing a customer more time to collect their items, but simultaneously allowing a following customer to process items through the identification system. In the case where packing areas are divided into more than one section, there is typically a device that will divert items into an available section. Such device is henceforth referred to as a diverter arm.

In one embodiment of a checkout device, the diverter arm may hold a fixed position. In another embodiment of a checkout device, the diverter arm may be moveable, where this movement may be achieved either manually or as the result of a signal to a mechanism that moves the position of the diverter arm. In the case where the diverter arm is moveable, items may approach different sides of the diverter arm, depending on the position of the diverter arm at any given time during the checkout process.

In a retail environment where many different items are offered, the items and the packaging and labelling associated with those items may be comprised of many forms and materials. In some cases, these forms and materials are very thin in part or in whole, and on occasion these thinner forms may penetrate the small spaces that exist between the lower surface of the diverter arm and the surface immediately below the diverter arm that is supporting the items. In one embodiment of a checkout device, this surface immediately below the diverter arm does not move. In another embodiment of a checkout device, this surface immediately below the diverter arm may be comprised of moving components such as a conveyor belt or rolling system. The purpose of these moving components may be to transport the items away from the identification system towards the packing area, or to reduce resistance when the items move towards the packing area.

Items in part or in whole that penetrate the spaces that exist between the lower surface of the diverter arm and the surface immediately below the diverter arm may be themselves damaged, or in the alternative may cause damage to the checkout device. Preventing or reducing the number of occurrences of such events is of importance to operators of retail environments, as well as their staff and their customers.

Consequently, there is a need for an improved solution that reduces the number of occurrences when items penetrate the space between a diverter arm and the surface below the diverter arm.

### Summary

It is an object of the present invention to provide an improved solution that alleviates or reduces the occurrence of the aforementioned drawbacks with present devices. Generally, the above objective is achieved by the attached independent patent claims.

According to a first aspect of the invention, there is provided a diverter arm for a checkout device. The checkout device has a desk with a first surface. The diverter arm comprises an elongated member having a first side portion, a second side portion, a top portion and a bottom portion and is configured to be arranged in a longitudinal direction parallel to the first surface with the bottom portion facing the first surface. The bottom portion comprises a first leg portion and a second leg portion providing a first bottom surface and a second bottom surface respectively, each bottom surface configured to face the first surface. The first and second leg portions in a direction transverse to the longitudinal direction are separated by a distance.

The leg portions may extend along the entire longitudinal length of the elongated member. Either leg portion may thus be formed as a continuous wall along the respective side portion, the first leg portion along the first side portion and the second leg portion along the second side portion.

By providing a diverter arm with a first and a second leg portion as described, the number of occurrences or events in which an item is damaged by a diverter arm and/or damage is caused to the checkout device as a result an item interacting with a diverter arm may be reduced, whether such damage occurs as a result of an item's form or associated packaging or labelling, or such damage occurs as a result of the position of the diverter arm apparatus, or such damage occurs as a result of the characteristics of the surface immediately beneath the diverter arm, or by some combination of these conditions.

There is a given direction of travel for items moving towards the diverter arm that gives rise to the likelihood that an item that penetrates the space beneath the bottom portion and the surface immediately below the diverter arm will necessarily encounter leg portions sequentially, with the first leg portion to be encountered hereafter referred to as the leading leg portion, and subsequent leg portions hereafter referred to as trailing leg portions. The position and orientation of the diverter arm may be changed by means of rotation about an axis, with the result that a leading leg portion in one orientation may not be the leading leg portion in another orientation. Hereafter the first edge of the leading leg portion that the item will encounter shall be referred to as the leading edge, and the first edge of each of the subsequent trailing leg portions that the item will encounter shall be referred to as a trailing edge.

In the event that an item in part or in whole penetrates the space between the bottom surface of the leading leg portion and the surface immediately below the diverter arm, an intended consequence shall be that one or more trailing edges may reduce the number of occurrences or events in which the item further penetrates the space between the bottom portion and the surface immediately below the diverter arm, with the result that the number of occurrences or events in which an item is damaged by a diverter arm and/or damage is caused to the checkout device as a result of an item interacting with a diverter arm should be reduced.

This may be an advantage in any arrangement of a checkout device comprising a conveyor belt or similar, and a diverter arm. In particular, this may be an advantage in arrangements with automatic scanners and self-checkout stations, since this type of arrangement may not have a checkout assistant at hand to assist if any items become trapped by the diverter arm.

The distance between the two leg portions provides that the trailing edge increases the possibility that the item is stopped from passing under the entire diverter arm.

In one embodiment, the first and second leg portions define a cavity extending along at least a part of the elongated member. Since the leg portions may be placed at a distance from each other, the leg portions and the distance may define a cavity in between the leg portions. The cavity may be defined by the leg portions and an inner structure which may connect the leg portions with each other. The cavity helps to capture items that may have passed under the leading leg portion, but that have been prevented by the trailing leg portion and its trailing edge from passing under the entire diverter arm. It may also be possible that the distance between the leg portions differ at some locations along the elongated member. Thus, the shape of the cavity may differ. Typically, the cavity may extend along the longitudinal length of the elongated member. It may however be possible that in order to provide strength to the diverter arm, the leg portions may be connected with transversally arranged ribs. The inner structure may be any shape such as curved, linear or angular. Hence, the cavity, leg portions and the inner structure may be formed to optimize any function or manufacturing procedure.

In one embodiment, the first and second leg portion comprises a foot portion. The foot portion, in the transversal direction, may be wider than an adjacent waist portion placed above the foot portion. The foot portion may be configured such that it may be wider than the rest of the leg portion. More specifically, the bottom surface of the foot portion may be wider than the immediate region above. The width may also be decreasing upwards until a waist portion of the leg portion. The waist portion may define the narrowest part of the leg portion. Above the waist portion, the leg portion may be wider, and may be increasing until the leg portions join at the inner structure. The foot portion of each leg portion may extend, relative to the waist portion, in both transversal directions from a centre of that leg portion. In that case, the foot portion may have the same functionality irrespective of orientation of the diverter arm or which direction the items are conveyed towards to diverter arm. Alternatively, the foot portion may widen from the waist portion at only one side of the leg portion, or widen in different degrees at the different sides of the leg portion. In that case, each leg portion may have differently formed sides and/or edges when acting as a leading edge or as a trailing edge.

In one embodiment each foot portion comprises an edge in connection to the bottom surface having an acute angle. Such an acute angled edge may form an acute angled leading edge of each leg portion or an acute angled trailing edge of each leg portion, or, if comprising two such edges, each leg portion may comprise both an acute angled leading edge and trailing edge. If a foot portion may be provided with an acute angled edge, the bottom portion of the diverter arm may include multiple acute angled edges close to the first surface, one edge on each side in the transverse direction of each foot portion. Hence, it may be less likely that an object penetrates any spaces under the diverter arm.

Effective leading edges and trailing edges may be provided. The reason being that an acute angled edge, in particular when closely arranged to the first surface may lift the object before the object may penetrate any spaces under the diverter arm. The function of the edge may be similar to a shovel, which due to its shape may provide an effective scraping effect and thereby prevent objects from moving underneath the edge. Each foot portion may be provided with an acute angled edge along its entire length, or along a part of the length that may be suitable. This may reduce the likelihood that an object penetrates any spaces under the diverter arm. The acute angled edge of a foot portion may in one embodiment be provided with an angle of less than 90 degrees, less than 75 degrees or less than 60 degrees. Further in one embodiment the angle may also be larger than 20 degrees or larger than 40 degrees. The angle may be measured from the bottom surface of the respective leg portion. The effect of an edge pitched at or below 90 degrees may be such that an item approaching the diverter arm is likely to be directed upward and away from the first surface. The pitch of each angled edge may determine the proportions of the foot portion and result in greater effectiveness in reducing the likelihood of an object penetrating any spaces under the diverter arm. In one embodiment of the foot portion, more acute angled edges may provide a wide foot portion. The leading edge and the trailing edge of a leg portion may be provided with different angles to the bottom surface thereof.

In one embodiment, each foot portion may comprise an edge having an acute angle on each side thereof in the transverse direction. By comprising such edge on each side of the foot portion, each leg portion and foot portion may be configured to provide the desired functionality of diverting items from either side. Alternatively, in an arrangement wherein the diverter arm only receives items on one side, each foot portion may be provided with one such edge on one side portion in the transverse direction.

In one embodiment, the second side portion may be substantially a symmetrical mirror image of the first side portion. Thereby, the diverter arm may be of a substantially symmetric shape, and thereby provide the same effect independent of its orientation relative to items approaching the diverter arm.

In one embodiment, the diverter arm further comprises a rear end portion, with the rear end portion being provided with rotating means defining a first rotational axis extending in a direction between the bottom portion and the top portion, such that the elongated member may be rotatable around the first rotational axis. By providing a rotating means, the diverter arm may be arranged to rotate in both a clockwise and anticlockwise direction. This may be an advantage where the required functionality includes diverting items towards one or more areas of the first surface at any given time during the checkout process or in the alternative between checkout processes.

In one embodiment, the elongated member may be constructed from a combination of materials including metals, alloys and/or plastics. It may be an advantage if the elongated member may be made from a material that may be easy to clean and may be resistant to wear and impact, since items may impact on the surfaces of the diverter arm. It may be an advantage if the material may be a metal, and in particular a metal that may be light. The metal may be aluminium, mild steel or stainless steel or a combination thereof. A diverter arm made from aluminium may be light as well as provide a surface that may be easy to clean. Aluminium may also be non-magnetic, which may prevent static electricity. Further, the elongated member may be made from an extruded aluminium profile. By using an extruded aluminium profile, it may be possible to provide a diverter arm that may be simple to produce. An extruded aluminium profile may also be simple to cut in suitable lengths. In that way, it may be possible to provide a diverter arm that may be suitable in any kind of environment. A large checkout device may require a long diverter arm, and a small checkout device may require a short diverter arm. It may further be possible that a part of the diverter arm may be made of one material and another part of another material. It may be an advantage that the diverter arm may be made from a material that may be hygienic, and simple to clean. For instance, the diverter arm may mainly be made of an aluminium extrusion or other suitable metal, and each leg portion and/or foot portion may be of a rubber material, plastics or the like. Alternatively, the elongated member may in whole or partly be of plastics, acrylics, silicon, rubber or the like.

In one embodiment, the diverter arm further comprises a sensor system to determine if an item or a part of an item is present in a cavity between the two leg portions. In a further embodiment, the sensor system may detect the presence of any part of an item within the longitudinal length of the cavity. The sensor system may provide a signal, when detecting the presence of an item in a cavity. The signal may be communicated to electronic systems that control aspects or functions of the checkout device. The sensor system may provide a signal immediately upon detecting the presence of an item in a cavity or the sensor system may provide for a programmable delay in sending the signal. The sensor system may comprise one or more sensors located along the longitudinal extension of the cavity. In one embodiment, the sensor system may comprise position sensing technology including photoelectric, inductive or capacitive sensors. In one embodiment a photoelectric sensor is directed in the longitudinal direction to the cavity. By using such sensor system, the presence of an item that has managed to pass under a leading leg portion may be detected. The movement of a conveyor belt and/or the diverter arm may be stopped to prevent the item from passing further under the diverter arm. Such sensor detection may be effective in combination with the trailing leg portion and the trailing edge. The trailing edge may provide that the item, possibly being thin, moves up into the cavity, and may therefore be detected by the sensor system. The sensor system may be arranged at a longitudinal end of the cavity, directed towards a second longitudinal end thereof. The longitudinal end may be at a front or rear portion of the elongated member, i.e. at an end connecting the first and second side portion.

In one embodiment, the elongated member further comprises a third leg, extending along the elongated member, and parallel with the first and second leg portions. The first and third leg portions define a first cavity, and the second and third leg portions define a second cavity. The diverter arm may consist of three or more leg portions. In an embodiment with three leg portions, two trailing leg portions and thereby two trailing edges may be provided. This may be an advantage where an item or part thereof penetrates the space under the diverter arm, since the subsequent trailing leg portions may increase the likelihood of inhibiting the item. Should an object find its way under the first leg portion, the second or third leg portion may inhibit the item from moving further under the diverter arm. Further, the leg portions may be as thin or thick as required. The thickness of the leg portions may be determined by for instance the manufacturing procedure, the overall shape or the material used in order to achieve the desired result.

In further embodiments, the elongated member may comprise yet additional leg portions. For a particular application, a suitable number of leg portions may be found to secure a safe item distribution functionality of the diverter arm. Each leg portion in such embodiment may be separated to each adjacent leg portion by a distance, in the same way as described for the embodiments above. When the elongated member is provided with *n* leg portions, a number of *n-1* cavities may be formed by and between the leg portions and n-1 trailing edges.

According to a second aspect of the invention, there is provided a checkout device comprising a desk having a first surface, wherein the checkout device comprises at least one diverter arm. The diverter arm may be installed such that the bottom surface of the diverter arm may be arranged in close connection to the first surface of the desk.

A checkout device may be provided with a diverter arm according to the invention. A checkout device may be laid out in many ways, and the diverter arm according to the invention may be suitable on any checkout device where a diverter arm may be needed. A checkout device may typically comprise at least one desk area with a substantially flat first surface. The diverter arm may be arranged where needed along the desk. Typically the diverter arm may be arranged in close connection to the first surface. The diverter arm may be arranged such that the first surface and the bottom portion are laid against each other. The first surface of the desk which the diverter arm may bear against may be any surface. It may be a flat static surface made of any material suitable, such as a metal like stainless steel. It may also be a surface of a transfer element, such as a conveyor of a suitable type. A part of, or parts of the desk may be provided with a transfer element. The transfer element may be one of, or a mix of, a belt conveyor, roller conveyor, chain conveyor, flexible conveyor or the like. It may also be any other type of suitable transfer element that moves the items from one point to another.

In one embodiment, the checkout device comprises a packing station, wherein the packing station comprises at least two packing sections placed adjacently to each other, wherein each two adjacently placed packing sections are divided by a divider element respectively, and at least one diverter arm may be movable between a first position and a second position in order to divert items to any one of said packing sections. A checkout device may typically comprise a packing station, where customers receive the items after an item identification process and pack them before leaving the retail environment. In many retail stores, a checkout device allows for several customers to be served at a time. For instance, a first customer pays for items and the items are being pushed aside to the packing station while a second customer may be served. However, the first customer may not have finished packing until the items of the second customer are pushed aside in a same direction. In order to not mix the items of the first customer and the second customer, the packing station needs several separate sections. Often a number of two sections are provided and two customers may pack their items at the same time. In order to divert the items towards the right packing section, the diverter arm may be movable in order to close or open the path to one of the packing sections.

The checkout device may comprise a number of activity stations. The activity stations may constitute at least a first loading station followed by at least a first scanning station, followed by at least a first diverting station, followed by a packing station. A checkout device may typically be laid out such that a customer enters on one side and loads items onto the desk. Following, the items may be scanned by a checkout assistant. Following, the scanned items may be moved to the packing station where the customer may receive the items. When the next customer may be served, it is important that the customers' items are not mixed. Therefore, it is common that the packing station is separated into several sections. The diverter arm may divert the items into any of the sections. For instance, the diverter arm may be movable between a position where the arm diverts the items to a first packing section, and a position where the diverter arm diverts the items to a second packing section. The checkout device may be an automated device, wherein the items may be moved through an item scanning device. The item scanning device may not be attended by a staff member or checkout assistant. Another alternative is that the checkout device may be a so called self check-out. In that case, the customer may scan the items using a scanner. However, the diverter arm may be used in any solution where a diverter arm may be needed. Further, any device or a combination of devices other than or possibly including an item scanning device may be used in the checkout process, including but not limited to manual numerical units, a bar code scanner, an analogue or digital scale, or any other device that may accept an input of a value related to or calculate a value derived from the identification of an item. In one embodiment, the checkout device may further comprise connecting means into which the diverter arm may be connected. The checkout device may comprise any means into which the diverter arm may be connected. For instance, the diverter arm may be connected to the divider element. Alternatively, the connection may be in the first surface.

In one embodiment, the connecting means may be a rotational connecting means defining a first rotational axis, and the diverter arm comprises a corresponding connecting means. When connected, the diverter arm may rotate around the first rotational axis in a plane parallel to the first surface. The diverter arm may be rotationally movable relative to the divider element in order to divert any items into one of the packing sections. The connecting means may be any kind that may provide rotational connection. Alternatively, the rotational connection may be arranged on some other part of the checkout device. The connection may be independent of the divider element, but arrange closely.

### Brief Description of the Drawings

The invention will in the following be described in more detail with reference to the enclosed drawings, wherein:
Fig. 1 illustrates a perspective view of a diverter arm according to an embodiment of the invention.
Fig. 2 illustrates a cross sectional view of a diverter arm according to an embodiment of the invention.
Fig. 3 illustrates a cross sectional view of a diverter arm according to an embodiment of the invention.
Fig. 4a is a detailed cross sectional view of a bottom portion according to an embodiment of the invention.
Fig. 4b is a detailed cross sectional view of a bottom portion according to an embodiment of the invention.
Fig. 5 illustrates a perspective view of a diverter arm according to an embodiment of the invention.
Fig. 6 illustrates a cross sectional view of a diverter arm according to an embodiment of the invention.
Fig. 7 illustrates a top view of a checkout device according to an embodiment of the invention.
Fig. 8 illustrates a top view of a checkout device according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

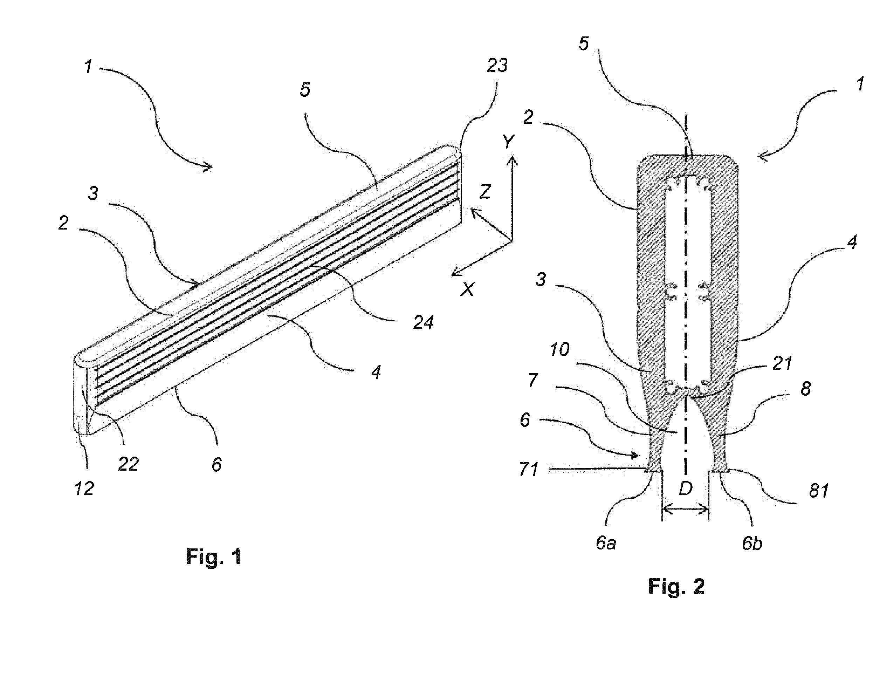

In fig. 1, a diverter arm 1 is illustrated. The diverter arm 1 generally constitutes an elongated member 2, extending in a longitudinal direction X. The elongated member 2 has a first side portion 3, a second side portion 4, a top portion 5 and, bottom portion 6, a front portion 22 and a rear end portion 23. The first and second side portions 3, 4 are situated on opposite sides, transversal to the longitudinal direction in a direction Z. The diverter arm 1 is provided with a pattern 24. This pattern may be any pattern that may contribute aesthetically. In fig. 1, the pattern constitutes a number of longitudinal grooves, which may be aesthetically appealing as well as functional.

Fig. 2 illustrates a cross sectional view of a diverter arm 1, seen in a direction along the longitudinal direction X. In fig. 2, it is illustrated that the lower part of the diverter arm 1 is provided with a first leg portion 7 and a second leg portion 8. Each leg portion in fig. 2 is arranged on a respective opposite side of the elongated member 2. The cross section is meant to show a general cross section, taken anywhere along the elongated member 2. Therefore, the first and second leg portions 7, 8 may extend continuously in the longitudinal direction, along the length of the elongated member 2. The second leg portions 7, 8 extend downwards on a respective side portion. At the bottom, the first and second leg portions 7, 8 are separated by a distance D, and connected in the centre of the diverter arm 1 via an inner structure 21. The first and second leg portions 7, 8 and the inner structure 21 together define a cavity 10. The cavity 10 may as well extend along the length of the elongated member 2. The cavity 10 in fig. 2 is arch shaped. This form may be determined based on functional or manufacturing conditions as well as strength requirements. Therefore, the shape may be any other shape. The wall thickness of the elongated element in fig. 2 may be designed such that the elongated element is suitable to be manufactured by extrusion, for instance.

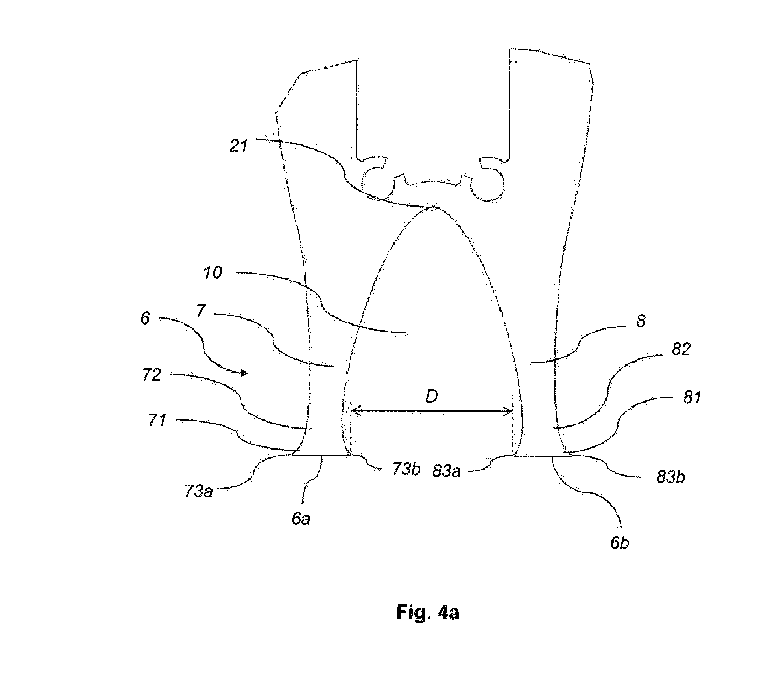

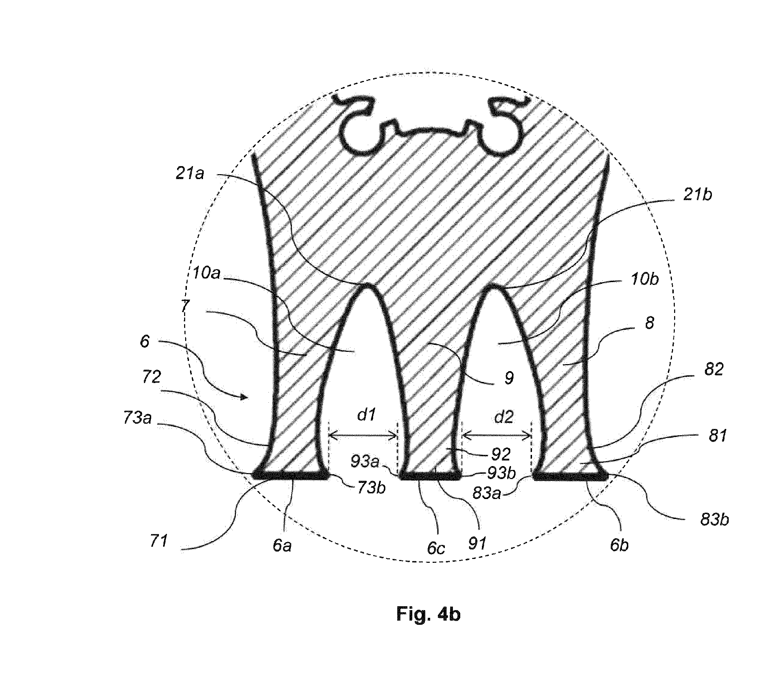

As seen in fig. 2, the first and second leg portion 7, 8 have a respective first foot portion 71 and second foot portion 81, situated at the bottom portion 6 of the diverter arm 1. The foot portions 71, 81 are wide in a transversal direction Z. The foot portions 71, 81 may be widest at the bottom surface. In fig. 2, the first and second foot portions 71, 81 respectively decrease in width until a respective first waist portion 72 and second waist portion 82 (see fig. 4). Above the first and second waist portion 72, 82, the leg portions 7, 8 increase in width, and form an inner structure 21 at which the first and second leg portions 7, 8 connect.

Referring back to fig. 1, the diverter arm 1 may in one embodiment be provided with a sensor system 12 arranged at a longitudinal end of the elongated member 2, i.e. at the front portion 22 or back portion 23. The sensor system 12 is configured to detect the presence of an item in the cavity 10. It is arranged at a longitudinal end and directed towards a second longitudinal end, e.g. arranged at the front portion 22 and directed towards the back portion 23. An item that reaches into the cavity 10, under the leading leg portion being the first leg portion 7 or the second leg portion 8, may be detected by the sensor system 12 which then provides a signal indicating presence of an item in the cavity 10.

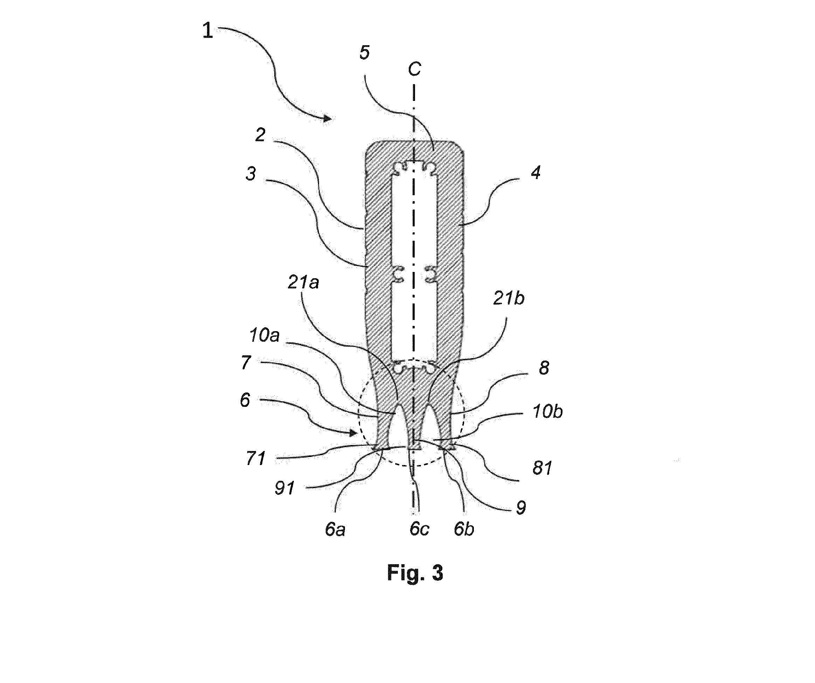

In fig. 3, is a cross sectional view of an embodiment of a diverter arm 1. The diverter arm 1 in fig. 3 further comprises a third leg portion 9, placed in between the first and second leg portions 7, 8. The first leg portion 7 and the third leg portion 9 are connected at an inner structure 21 a, and the third leg portion 9 and the second leg portion 8 are connected at an inner structure 21 b, forming respective cavities 10a, 10b. In fig. 3, the first side portion 3 with the first leg portion 7, third leg portion 9 and inner structure 21 a, is substantially symmetrical to the second side portion 4 with the second leg portion 8, third leg portion 9 and the inner structure 21 b, with symmetry line C running through the centre of the cross section in a Y-direction. A substantially symmetric diverter arm 1 may increase the effectiveness of the diverter arm 1 in multiple orientations, such as when items are conveyed on the first surface 52 toward first side portion 3 and in another orientation toward second side portion 4. It is possible that the first and second side portions 3, 4 differ from each other and therefore the diverter arm not need to be symmetrical about symmetry line C. Applicable features above described in conjunction with the first leg portion 7 and second leg portion 8 may also be provided for the third leg portion 9. A diverter arm 1 having three or more leg portions may comprise a sensor unit 12 similarly as described above in conjunction with fig. 1 and fig. 2. Such sensor unit 12 may be arranged in one of the cavities 10a, 10b, or be supplemented with an additional sensor unit, providing one sensor unit 12 in each cavity.

Fig. 4a is a detailed section view of a bottom portion 6 according to an embodiment of the invention illustrated in fig. 2. The diverter arm 1 in fig. 4a comprises a first and second leg portion 7, 8, as previously illustrated in fig. 2. Here it is shown in more detail the shape of the respective foot portions 71, 81. Each of the leg portions 7, 8 comprises a foot portion 71, 81 which is wider at the bottom surface 6a, 6b. This width, combined with a continuous decreasing width up until a waist portion 72, 82 forms an acute edge 73a, 73b, 83a, 83b on either side of the foot portion 7, 8. When the diverter arm 1 is arranged against a first surface 52, with the foot portion bearing against or nearly against the first surface 52, the edges may contribute to a decreased likelihood that any part of an item penetrates any spaces under the diverter arm 1. This may be because the design of the edges may provide a scooping effect. In case any item approaches the edge, the edge may lift off the item from the first surface 52 and thereby divert the object in another direction. However, should an item penetrate under the leading edge, such as the edge 73a in the case where an item approaches the first side portion 3, there is a chance that the second foot portion on the trailing leg portion prevents the item from further penetrating the space between the bottom surface 6a, 6b and the first surface 52.

Fig. 4b is a detailed section view of a bottom portion 6 according to an embodiment of the invention illustrated in fig. 3. The diverter arm 1 in fig. 4b comprises a first, second and third leg portions 7, 8, 9, as previously illustrated in fig. 3. Here it is shown in more detail the shape of the respective foot portions 71, 81, 91. Each of the leg portions 7, 8, 9 comprises a foot portion 71, 81, 91 which is wider at the bottom surface 6a, 6b, 6c. This width, combined with a continuous decreasing width up until a waist portion 72, 82, 92 forms an acute angled edge 73a, 73b, 83a, 83b, 93a, 93b on either side of each foot portion 7, 8, 9. When the diverter arm 1 is arranged against a first surface 52, with the foot portion bearing against or nearly against the first surface 52, the edges may contribute to a decreased likelihood that any part of an item penetrates any spaces under the diverter arm 1. This may be because the design of the edges may provide a scooping effect. In case any item may approach the edge, the edge may lift off the item from the first surface 52 and thereby divert the item in another direction. Should however, an item find its way under the leading edge, there is a chance that the second or third trailing leg portion and their trailing edges prevent the item from further penetrating the space between the bottom surface 6a, 6b, 6c and the first surface 52.

When an item approaches and reaches the diverter arm 1 towards the first leg portion 7, the edge 73a of the first leg portion 7 would function as a leading edge. If the item would penetrate any space under the first leg portion 7 or pass beneath the edge 73a, the item would reach the cavity 10a between the first leg portion 7 and the third leg portion 9. The trailing edge 93a will then further try to stop the item from passing under the diverter arm. If it succeeds, the item would be trapped in the cavity 10a. This situation is also the same in the embodiment shown in fig. 2 and fig 4a with the first and second leg portions and their respective edges. In the embodiment shown in fig. 4b, should it occur that an item passes under the third leg portion 9, the embodiment has the further possibility of stopping the item by providing a further cavity 10b and the trailing edge of the second leg portion 8, i.e. edge 83a.

If the item reaches the diverter arm towards the second leg portion 8, the edge 83b would function as a leading edge, and edges 93b and 73b of the third and first leg portions respectively would function as trailing edges. In embodiments with even more leg portions separated by respective distances (and forming cavities), there would be further trailing edges providing further possibilities for preventing the item from passing under the diverter arm.

From fig. 4b, it is also clear that the first leg portion 7 and third leg portion 9 are separated by a distance d1 as defined by the distance measured in the Z direction between edge 73b and 93a. Similarly, since the diverter arm 1 is symmetrical around the symmetry line C, the second and third leg portions 8, 9 are also separated by a distance d2 as defined by the distance measured in the Z direction between edge 93b and 83a. In fig. 4b, the distances d1 and d2 are substantially the same, due to the symmetry of the diverter arm 1 as depicted. It should however be clarified, that the diverter arm 1 can be of any other design than symmetrical, depending on the specific requirements. The described features illustrated in fig. 4b are also applicable to the above described embodiment having two leg portions.

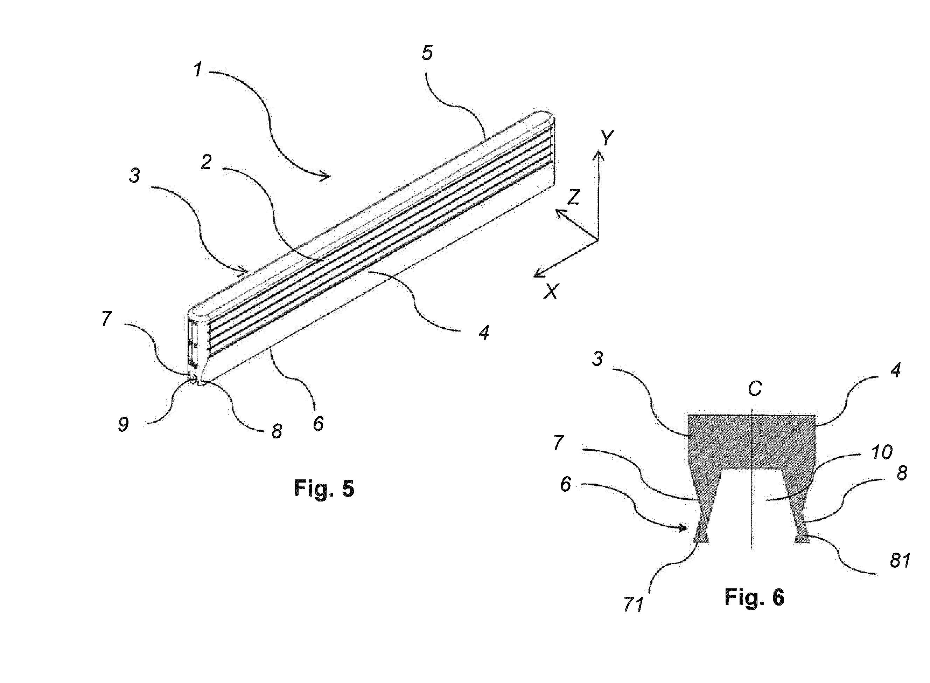

Fig. 5 shows a perspective view of a diverter arm having three leg portions 7, 8, 9. A diverter arm 1 of the type may be symmetrically shaped such that the first side portion 3 and the second side portion 4 are substantially similarly designed.

Fig. 6 shows a cross sectional view of a diverter arm 1 according to an embodiment. This design has generally flat faces forming the cavity 10, which may be desired in some installations. The design of the cavity with flat and/or curved faces, as illustrated in e.g. fig. 4a, may be selected to achieve a desired behaviour when a trailing edge directs an item into the cavity 10.

Generally, the top portion 5 and side portions 3, 4 may be designed in any way. However, the edges 73a, 73b, 83a, 83b, 93a, 93b may be generally similar on the respective foot portions 71, 81, 91.

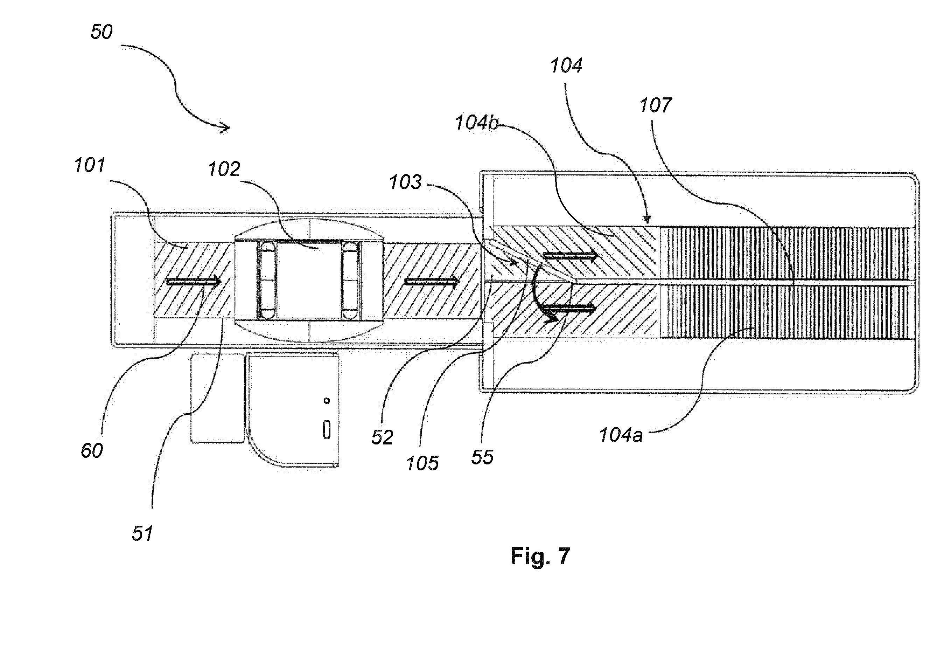

Fig. 7 is a top view of a checkout device 50. Checkout device 50 may differ in layout, but this may schematically show a general checkout device 50 in a retail store or retail environment. This particular layout is an automatic checkout device 50 which has an automated scanning station 102. However, a diverter arm 1 according to the invention may be just as suitable on any type of checkout device 50 that benefits from diverter arms 1.

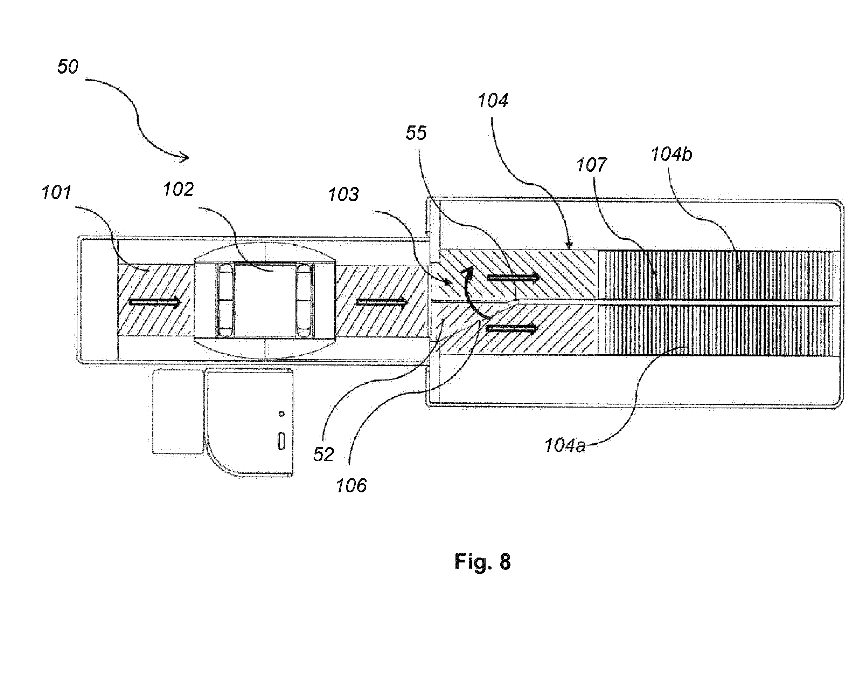

The checkout device 50 in fig. 7 is typically laid out such that it comprises a desk 51, on which a customer loads items. The desk has a first surface 52.The items may be loaded in a loading station 101 of the checkout device 50. Typically, the items travel along a path 60, illustrated by arrows, of the checkout device 50. The items may travel by means of a conveyor, such as a belt or rollers along the path 60. The conveyor may provide the first surface 52. Following loading, the items may travel through a scanner 102. In an automated checkout device 50, the scanning station 102 may be entirely automatic. In a manual scanning station 102, the items may be scanned by a cashier or checkout assistant, or scanned by the customer with a self check-out procedure. The checkout device 50 further comprises a diverter station 103, in which the scanned items are being diverted by the diverter arm 1 towards a packing station 104. On the checkout device 50 in fig. 7, the packing station 104 comprises two packing sections 104a, 104b, separated by a divider 107. In the beginning of the packing station 104, a diverter arm 1 is installed on the first surface 52, shown in the first position 105 in fig. 7. The diverter arm 1 in fig. 7 is rotationally connected at a connection point 55 in which a first rotational axis 55 may be provided, and the diverter arm 1 is rotationally movable between a first position 105 and a second position 106 as can be seen in fig. 8. The position of the diverter arm 1 determines which packing section 104a, 104b the items may be directed to. In fig. 7, the diverter arm 1 is in a first position 105. Thereby, the path towards the packing section 104b is closed, and the items may be directed towards the first packing section 104a. When a customer has finished the item identification process, the next customer may begin the item identification process. However, as it is important that the items of each customer are not mixed in some way, the diverter arm 1 moves to a second position 106, as seen in fig. 8 prior to the next customer beginning the item identification process. Thereby, the path to the first packing section 104a is closed, and the path towards the second packing section 104b is opened. It is common that the packing station 104 is separated into multiple sections 104a, 104b. The checkout device 50 as seen in fig. 7 and 8 is schematically illustrated, and illustrates a common configuration of checkout device 50. However, a checkout device 50 with a different layout or configuration may be possible. Thus, the diverter arm 1 may be suitable in any layout or configuration of a checkout device 50 having two or more packing stations 104.

The diverter arm 1 may be controlled automatically, according to a determined control program or logic. For instance, the diverter arm may move automatically when the first customer the item identification process or when all items of the first customer have passed the diverting station. Alternatively, the diverter arm may be manually controlled, either by the customer or a cashier or checkout assistant. Possibly, it may be moved once a control button is activated.

Further, any device or a combination of devices other than or possibly including an item scanning device may be used in the checkout process, including but not limited to manual numerical units, a bar code scanner, an analogue or digital scale, or any other device that may accept an input of a value related to or calculate a value derived from the identification of an item.

As discussed in the previous section, fig. 8 illustrates the checkout device 50 as shown in fig. 7 with the diverter arm 1 in a second position 106.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A diverter arm (1) for a checkout device (50), the checkout device (50) having a desk (51) with a first surface (52), the diverter arm (1) comprising an elongated member (2) having a first side portion (3), a second side portion (4), a top portion (5) and a bottom portion (6) and is configured to be arranged in a longitudinal direction (X) parallel to said first surface (52) with the bottom portion (6) facing the first surface (52),
**characterized in that** the bottom portion (6) comprises a first leg portion (7) and a second leg portion (8) providing a first bottom surface (6a) and a second bottom surface (6b) respectively, each bottom surface (6a, 6b) configured to face the first surface (52), wherein the first and second leg portions (7, 8) in a direction (Z) transverse to the longitudinal direction (X) are separated by a distance (D).

2. Diverter arm (1) according to claim 1, wherein said leg portions (7, 8) define a cavity (10) extending in the longitudinal direction (X) along at least a part of the elongated member (2).

3. Diverter arm (1) according to any of the preceding claims, wherein each of the first and second leg portions (7, 8) comprises a foot portion (71, 81), wherein the foot portion (71, 81) in the transverse direction (Z) is wider than an adjacent waist portion (72, 82) placed above the foot portion.

4. Diverter arm (1) according to claim 3, wherein each foot portion (71, 81, 91) comprises an edge (73a, 73b, 83a, 83b, 93a, 93b) in connection to the respective bottom surface (6a, 6b, 6c) having an acute angle.

5. Diverter arm (1) according to claim 4, wherein each foot portion (71, 81, 91) comprises an edge (73a, 73b, 83a, 83b, 93a, 93b) having an acute angle on each side thereof in the transverse direction (Z).

6. Diverter arm (1) according to any of the preceding claims, wherein the second side portion (4) is substantially a symmetrical mirror image of the first side portion (3).

7. Diverter arm (1) according to any of the preceding claims, wherein the elongated member (2) is in whole or partly made from a metal, plastics, acrylics, silicon or rubber.

8. Diverter arm (1) according to claim 2, further comprising a sensor system (12) for detecting the presence of a part or portion of an item in the cavity (10).

9. Diverter arm (1) according to claim 9, wherein the sensor system (12) is configured to detect the presence of a part or portion of an item along the entire longitudinal extension of the cavity (10).

10. Diverter arm (1) according to claim 8 or 9, wherein the sensor system (12) upon detection the presence of an item in the cavity (10), emits a signal to an electronic system that controls aspects or functions of the checkout device (50).

11. Diverter arm (1) according to any of the preceding claims, further comprising a third leg portion (9), extending along the elongated member (2), parallel with the first and second leg portions (7, 8), wherein the first and third leg portions (7, 9) define a first cavity (10a), and the second and third leg portions (8, 9) define a second cavity (10b).

12. A checkout device (50) comprising a desk (51) having a first surface (52), wherein the checkout device (50) comprises at least one diverter arm (1) according to any of the claims 1-10, wherein the diverter arm (1) is installed such that the bottom surface (6) of the diverter arm (1) is arranged in close connection to the first surface (52) of the desk (51).

13. A checkout device (50) according to claim 11, wherein the checkout device (50) comprises a packing station (104), wherein the packing station (104) comprises at least two packing sections (104a, 104b) placed adjacently to each other, wherein each two adjacently placed packing sections (104a, 104b) are separated by a divider element (107) respectively, and at least one diverter arm (1) is movable between a first position (105) and a second position (106) in order to divert items to any one of said packing sections (104a, 104b).

14. A checkout device (50) according to any of the claims 11-13, further comprising connecting means (55) into which the diverter arm (1) is connected.

15. A checkout device (50) according to claim 13, wherein the connecting means (55) is a rotational connecting means defining a first rotational axis, and the diverter arm (1) comprises a corresponding connecting means arranged such that, when connected, the diverter arm (1) is rotatable around the first rotational axis in a plane parallel to the first surface (52).
